# EUROPÄISCHE PATENTSCHRIFT

(11) **EP 1 351 267 B1**
(45) Veröffentlichungstag und Bekanntmachung des Hinweises auf die Patenterteilung: **12.01.2005**
(21) Anmeldenummer: 02405271.4
(22) Anmeldetag: 05.04.2002
(51) Int. Cl.: H01H 9/56, H02J 3/04

(54) **Verfahren fur ein netzsynchrones Schalten von Leistungsschaltern und Vorrichtung zur Durchfuhrung dieses Verfahrens**
Method and apparatus for a network synchronized switching of a power switch
Méthode et dispositif pour une commutation synchrone d'un interrupteur de puissance avec un réseau électrique

(43) Veröffentlichungstag der Anmeldung: 08.10.2003
(73) Patentinhaber: ABB Technology AG, 8050 Zürich (CH)
(72) Erfinder: Stanek, Michael, 5400 Baden (CH)
(74) Vertreter: ABB Patent Attorneys

(56) Entgegenhaltungen:
- US-A- 5 563 459

## Beschreibung

### TECHNISCHES GEBIET

Die Erfindung geht aus von einem Verfahren für ein netzsynchrones Schalten von Leistungsschaltern gemäss dem Oberbegriff des Anspruchs 1 und von einer Vorrichtung zur Durchführung dieses Verfahrens gemäss dem Oberbegriff des Anspruchs 3.

### STAND DER TECHNIK

Es ist bekannt, dass in Energieverteilungsnetzen Leistungsschalter beim Ein- und beim Ausschalten so betätigt werden können, dass die Belastung des jeweiligen Leistungsschalters möglichst gering ist, insbesondere auch im Hinblick auf den Kontaktabbrand bzw. auf die durch die jeweilige Schalthandlung bedingte Generierung von Überspannungen oder Überströmen.

Aus der Offenlegungsschrift DE 1 565 995 ist eine Einrichtung bekannt, die eine netzsynchrone Auslösung eines Wechselstromleistungsschalters ermöglicht. Bei dieser Einrichtung ist eine Strommessung und eine Spannungsmessung vorgesehen, welche die beiden Messsignale generieren, welche die eigentliche Steuereinrichtung für die Synchronisierung speisen. Diese Messung erfolgt in der Regel auf der Netzseite des Leistungsschalters, da auf dieser Seite stets die Netzspannung ansteht, welche als Bezugswert für das netzsynchrone Schalten verwendet wird. Auf der Lastseite des Leistungsschalters ist keine Spannungsmessung vorgesehen, da bei abgeschalteter Last auf dieser Seite keine Spannung auftritt, die als Bezugswert für das netzsynchrone Schalten dienen könnte.

Im Dokument "US-A-5 563 459" wird ein Verfahren für ein netzsynchrone Schalten von Leistungsschalter gemäß dem Oberbegriff des Anspruchs 1, und eine Vorrichtung zur dessen Durchführung gemäß dem Oberbegriff des Anspruchs 3 offenbart.

Es gibt jedoch Schaltanlagenkonfigurationen, bei denen die Lastflussrichtung durch den Leistungsschalter nicht eindeutig definiert ist. In derartigen Schaltanlagen ist mit der beschriebenen Einrichtung nicht in allen Betriebsfällen ein netzsynchrones Schalten möglich.

### DARSTELLUNG DER ERFINDUNG

Die Erfindung, wie sie in den unabhängigen Ansprüchen gekennzeichnet ist, löst die Aufgabe, ein Verfahren, welches ein von der Lastflussrichtung unabhängiges netzsynchrones Schälten von Leistungsschaltern ermöglicht, und eine Vorrichtung zur Durchführung dieses Verfahrens anzugeben

Das Verfahren für ein netzsynchrones Schalten von Leistungsschaltern umfasst die folgenden Verfahrensschritte: - der durch einen Leistungsschalter fliessende Strom wird gemessen und zudem wird auf einer ersten Seite des Leistungsschalters eine Netzspannung gemessen,
- zusätzlich erfolgt auf einer zweiten Seite des Leistungsschalters eine Spannungsmessung
- alle Messsignale werden in eine Steuereinrichtung eingespeist,
- in der Steuereinrichtung wird anhand von dort für alle möglichen Schaltfälle gespeicherten charakteristischen Daten entschieden, welches Messsignal als Bezugswert für das netzsynchrone Auslösen des Leistungsschalters verwendet wird,
- nach diesem Entscheid wird in der Steuereinrichtung ein das netzsynchrone Schalten des Leistungsschalters auslösender Schaltbefehl generiert, und
- der Leistungsschalter führt den Schaltbefehl aus.

Die Steuereinrichtung detektiert sämtliche möglichen Schaltfälle und veranlasst die dem jeweiligen Schaltfall zugeordnete netzsynchrone Schaltung.

Die Vorrichtung zur Durchführung des Verfahrens für ein netzsynchrones Schalten von Leistungsschaltern ist mit einem Stromwandler und mit einem Spannungswandler auf einer ersten Seite eines Leistungsschalters versehen. Zudem ist auf einer zweiten Seite des Leistungsschalters ein weiterer Spannungswandler vorgesehen. Für die Messsignale des Stromwandlers und der beiden Spannungswandler bestehen Verbindungen mit einer Steuereinrichtung. In der Steuereinrichtung ist ein Speicher mit charakteristischen Daten für alle möglichen Schaltfälle vorgesehen, aufgrund derer entschieden wird, welches Messsignal als Bezugswert für das netzsynchrone Auslösen des Leistungsschalters verwendbar ist. In der Steuereinrichtung sind Mittel vorgesehen, die einen das netzsynchrone Schalten des Leistungsschalters auslösenden Schaltbefehl generieren können.

Die Erfindung, ihre Weiterbildung und die damit erzielbaren Vorteile werden nachstehend anhand der Zeichnung, welche lediglich einen möglichen Ausführungsweg darstellt, näher erläutert.

### KURZE BESCHREIBUNG DER ZEICHNUNG

Die einzige Figur zeigt einen vereinfacht einphasig dargestellten Teil einer Schaltanlage eines Energieverteilungsnetzes.

Alle für das unmittelbare Verständnis der Erfindung nicht erforderlichen Elemente sind nicht dargestellt bzw. nicht beschrieben.

### WEGE ZUR AUSFÜHRUNG DER ERFINDUNG

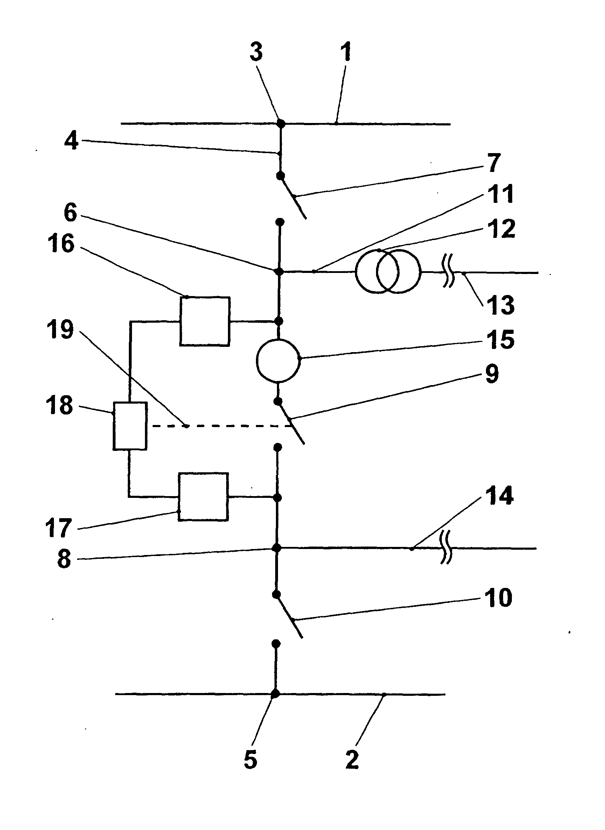

Die Figur 1 zeigt einen vereinfacht einphasig dargestellten Teil einer Schaltanlage, die wiederum als Teil eines nicht weiter dargestellten Energieverteilungsnetzes anzusehen ist. Diese Schaltanlage umfasst beispielsweise zwei Sammelschienen 1 und 2. Von einer Klemme 3 der Sammelschiene 1 zweigt eine Leitung 4 ab, die mit einer Klemme 5 der Sammelschiene 2 verbunden ist. Zwischen der Klemme 3 und einer ebenfalls mit der Leitung 4 verbundenen Klemme 6 ist ein Leistungsschalter 7 angeordnet, der die Leitung 4 unterbrechen kann. Zwischen der Klemme 6 und einer ebenfalls mit der Leitung 4 verbundenen Klemme 8 ist ein zweiter Leistungsschalter 9 angeordnet, der die Leitung 4 unterbrechen kann. Zwischen der Klemme 8 und der Klemme 5 ist ein dritter Leistungsschalter 10 angeordnet, der die Leitung 4 unterbrechen kann.

Von der Klemme 6 zweigt eine Verbindungsleitung 11 ab, welche die Klemme 6 mit einem Transformator 12 verbindet. Vom Transformator 12 geht eine Leitung 13 ab. Diese Verbindungsleitung 11 kann, je nach Betriebszustand des Energieverteilungsnetzes, der Leistungseinspeisung dienen oder sie kann elektrische Energie über die Leitung 13 zu einem Netzteil abführen, wo gerade Energie benötigt wird. Von der Klemme 8 zweigt ebenfalls eine Leitung 14 ab, die, je nach Betriebszustand des Energieverteilungsnetzes, elektrische Energie zu- oder abführen kann. Die Leistungsflüsse durch die Leitung 4 sind demnach vom jeweiligen Betriebszustand des Energieverteilungsnetzes abhängig, sie können vergleichsweise rasch die Richtung ändern.

In der Verbindung zwischen der Klemme 6 und dem Leistungsschalter 9 ist ein Stromwandler 15 vorgesehen. Zudem ist in diesem mit der Klemme 6 verbundenen Bereich ein Spannungswandler 16 angeschlossen. Im Bereich zwischen der Klemme 8 und dem Leistungsschalter 9 ist ein weiterer Spannungswandler 17 angeschlossen. Die beiden Spannungswandler 16 und 17 sind mit einer Steuereinrichtung 18 verbunden, welche deren Messsignale weiter verarbeitet. Die vom Stromwandler 15 aufgenommenen Messsignale werden ebenfalls in der Steuereinrichtung 18 weiter verarbeitet. Die Steuereinrichtung 18 vergleicht die empfangenen Messsignale mit bereits gespeicherten Daten.

Die Steuereinrichtung 18 ist dem Leistungsschalter 9 zugeordnet. Die in ihr gespeicherten Daten umfassen die Charakteristika aller an diesem Einbauort möglichen Betriebsund Fehlerfälle und definieren sie eindeutig. Zudem enthält sie den Algorithmus, mit dessen Hilfe für jeden spezifischen Schaltfall ein entsprechendes netzsynchrones Auslösen des Leistungsschalters 9 gewährleistet wird. Ferner können auch Daten über den aktuellen Betriebszustand des Leistungsschalters 9, beispielsweise betriebsbedingte Änderungen der Eigenzeit, abbrandbedingte Änderung des Kontaktabstands und dergleichen, durch Sensoren erfasst und durch die Steuereinrichtung 18 entsprechend berücksichtigt werden. Der Leistungsschalter 9 ist, zusammen mit der ihm zugeordneten Steuereinrichtung 18, für netzsynchrones Schalten geeignet. Da hier an beiden Seiten des Leistungsschalters 9 Spannungsmessungen vorgesehen sind, kann die Steuereinrichtung 18 mittels Vergleichen mit den in ihr gespeicherten Daten auch in jedem möglichen Fehlerfall stets eindeutig bestimmen, welche Seite des Leistungsschalters 9 als Bezugsbasis für das netzsynchrone Schalten herangezogen werden kann. Insbesondere ist auch im Normalbetrieb, unabhängig von der Lastflussrichtung durch den Leistungsschalter 9, ein netzsynchrones Schalten dieses Leistungsschalters 9 gewährleistet.

Eine gestrichelte Wirkungslinie 19 deutet an, dass die Steuereinrichtung 18 den Leistungsschalter 9 betätigt, wenn eines der vorgegebenen Auslösekriterien erfüllt ist. Der Leistungsschalter 9 wird dann stets so ausgelöst, dass er netzsynchron schaltet.

Zur Erläuterung der Wirkungsweise wird die Figur 1 näher betrachtet. Wenn der Leistungsschalter 9 ausgeschaltet ist und eingeschaltet werden soll, so liefern die beiden Spannungswandler 16 und 17 Messsignale, die den auf der jeweiligen Seite anstehenden Spannungen entsprechen. Wenn an beiden Seiten die gleiche Spannung ansteht, so erkennt die Steuereinrichtung 18 dies und die Einschaltung erfolgt problemlos. Ist jedoch auf einer Seite des Leistungsschalters 9 keine Spannung vorhanden, d. h. diese Seite des Netzes ist abgeschaltet, so wählt die Steuereinrichtung 18 die andere Seite mit anstehender Spannung als Bezugswert für das netzsynchrone Einschalten. Der Leistungsschalter 9 wird dann durch die Steuereinrichtung 18 so ausgelöst, dass die Kontaktgabe so erfolgt, dass keine oder nur geringe Einschaltüberspannungen oder Überströme auftreten können. Die Netzisolation wird in diesem Fall spannungsmässig nicht nennenswert belastet, wodurch die dielektrische Betriebssicherheit des Netzes vorteilhaft verbessert wird. Die Spannungsmessung auf beiden Seiten des Leistungsschalters 9 und der Vergleich der Messwerte verhindert auch, dass zwei Netzteile, die infolge einer Störung asynchron betrieben werden, zusammengeschaltet werden können. Eine derartige Fehlschaltung könnte grosse Folgeschäden verursachen. Sollen kapazitive Lasten zugeschaltet werden, so wird der Leistungsschalter 9 so ausgelöst, dass hohe Einschaltströme vermieden werden.

Bei Kurzschlussabschaltungen erfolgt die Auslösung des Leistungsschalters 9 so, dass in ihm eine möglichst kurze Lichtbogenzeit erreicht wird, wodurch dessen Kontaktabbrand klein gehalten wird, was eine vorteilhaft verlängerte Lebensdauer der Kontakte zur Folge hat. Beim Abschalten von leerlaufenden Leitungen, dieser Schaltfall wird ebenfalls von der Steuereinrichtung 18 detektiert, wird der Leistungsschalter 9 so ausgelöst, dass kein zu frühes Abreissen von kleinen induktiven Strömen auftritt. Im übrigen wird beim betriebsmässigen Abschalten von Leitungen oder kleinen induktiven Belastungen von der Steuereinrichtung 18 her eine längere Lichtbogenzeit eingestellt, um zu erreichen, dass beim Erlöschen des Lichtbogens ein möglichst grosser Kontaktabstand im Leistungsschalter 9 besteht. Dieser vergleichsweise grosse Kontaktabstand hat zur Folge, dass eine vergleichsweise grosse Wiederzündfestigkeit im Leistungsschalter 9 erreicht wird, sodass keine durch Wiederzündungen angeregten Überspannungen im Energieverteilungsnetz auftreten können. In diesem Fall wird die Isolation des Netzes vorteilhaft weniger belastet.

### BEZEICHNUNGSLISTE

- 1,2: Sammelschiene
- 3: Klemme
- 4: Leitung
- 5,6: Klemme
- 7: Leistungsschalter
- 8: Klemme
- 9,10: Leistungsschalter
- 11: Verbindungsleitung
- 12: Transformator
- 13,14: Leitung
- 15: Stromwandler
- 16,17: Spannungswandler
- 18: Steuereinrichtung
- 19: gestrichelte Wirkungslinie

## Patentansprüche

1. Verfahren für ein netzsynchrones Schalten von Leistungsschaltern, bei welchem der durch einen Leistungsschalter (9) fliessende Strom und auf einer ersten Seite des Leistungsschalters (9) eine Netzspannung gemessen wird, wobei,
- alle Messsignale in eine Steuereinrichtung (18) eingespeist werden,
- in der Steuereinrichtung (18) anhand von dort für alle möglichen Schaltfälle gespeicherten charakteristischen Daten entschieden wird, welches Messsignal als Bezugswert für das netzsynchrone Auslösen des Leistungsschalters (9) verwendet wird,
- nach diesem Entscheid in der Steuereinrichtung (18) ein das netzsynchrone Schalten des Leistungsschalters (9) auslösender Schaltbefehl generiert wird, und
- der Leistungsschalter (9) den Schaltbefehl ausführt, **dadurch gekennzeichnet,**
- **dass** zusätzlich auf einer zweiten Seite des Leistungsschalters (9) eine Spannungsmessung erfolgt.

2. Verfahren nach Anspruch 1, **dadurch gekennzeichnet,**
- **dass** die Steuereinrichtung (18) sämtliche möglichen Schaltfälle detektiert und die dem jeweiligen Schaltfall zugeordnete netzsynchrone Schaltung des Leistungsschalters (9) veranlasst.

3. Vorrichtung zur Durchführung eines Verfahrens für ein netzsynchrones Schalten von Leistungsschaltern, mit einem Stromwandler (15) und mit einem Spannungswandler (16) auf einer ersten Seite eines Leistungsschalters (9), wobei
- in der Steuereinrichtung (18) ein Speicher mit für alle möglichen Schaltfälle charakteristischen Daten vorgesehen ist, aufgrund derer entschieden wird, welches Messsignal im jeweiligen Schaltfall als Bezugswert für das netzsynchrone Auslösen des Leistungsschalters (9) verwendbar ist,
- in der Steuereinrichtung (18) Mittel vorgesehen sind, die einen das netzsynchrone Schalten des Leistungsschalters (9) auslösenden Schaltbefehl generieren können, **dadurch gekennzeichnet.**
- **dass** auf einer zweiten Seite des Leistungsschalters (9) ein weiterer Spannungswandler (17) vorgesehen ist,
- **dass** für die Messsignale des Stromwandlers (15) und der beiden Spannungswandler (16,17) Verbindungen mit einer Steuereinrichtung (18) bestehen.

## Claims

1. Method for mains-synchronous switching of circuit breakers, in which the current flowing through a circuit breaker (9) and a mains voltage on a first side of the circuit breaker (9) are measured,
- with all the measurement signals being fed to a control device (18),
- with characteristic data which is stored in the control device (18) for all possible switching situations being used by the control device (18) to decide which measurement signal is used as the reference value for the mains-synchronous tripping of the circuit breaker (9),
- with a switching command, which initiates the mains-synchronous switching of the circuit breaker (9), being generated in the control device (18) on the basis of this decision, and
- with the circuit breaker (9) carrying out the switching command, **characterized**
- **in that** a voltage measurement is additionally carried out on a second side of the circuit breaker (9).

2. Method according to Claim 1, **characterized**
- **in that** the control device (18) detects all possible switching situations and initiates the mains-synchronous switching of the circuit breaker (9) associated with the respective switching situation.

3. Apparatus for carrying out a method for mains-synchronous switching of circuit breakers, having a current transformer (15) and having a voltage transformer (16) on a first side of a circuit breaker (9),
- with the control device (18) having a memory with data which is characteristic of all possible switching situations, which data is used to decide which measurement signal can be used in the respective switching situation as the reference value for the mains-synchronous tripping of the circuit breaker (9), and
- with the control device (18) having means which can generate a switching command which initiates the mains-synchronous switching of the circuit breaker (9), **characterized**
- **in that** a further voltage transformer (17) is provided on a second side of the circuit breaker (9),
- **in that** connections to a control device (18) exist for the measurement signals from the current transformer (15) and from the two voltage transformers (16, 17).

## Revendications

1. Procédé pour une commutation synchronisée en réseau de commutateurs de puissance, lors duquel le courant parcourant un commutateur de puissance (9) ainsi qu'une tension de réseau sur un premier côté du commutateur de puissance (9) sont mesurés,
- tous les signaux de mesure étant alimentés dans un dispositif de commande (18),
- étant décidé à l'aide des données caractéristiques mémorisées dans le dispositif de commande (18) depuis celui-ci pour tous les cas de commutation possibles quel signal de mesure est utilisé en tant que valeur de référence pour le déclenchement synchronisé en réseau du commutateur de puissance (9),
- un ordre de commutation déclenchant la commutation synchronisée en réseau du commutateur de puissance (9) étant généré après cette décision dans le dispositif de commande (18), et
- le commutateur de puissance (9) réalisant l'ordre de commutation, **caractérisé en ce**
- **qu'**une mesure de tension est effectuée en outre sur un deuxième côté du commutateur de puissance (9).

2. Procédé selon la revendication 1, **caractérisé en ce**
- **que** le dispositif de commande (18) détecte tous les cas de commutation possibles et provoque la commutation synchronisée en réseau associée au cas de commutation respectif du commutateur de puissance (9).

3. Dispositif en vue de réaliser un procédé pour une commutation synchronisée en réseau de commutateurs de puissance, avec un transformateur de courant (15) et avec un transformateur de tension (16) sur un premier côté d'un commutateur de puissance (9),
- une mémoire avec les données caractéristiques pour tous les cas de commutation possibles étant prévue dans le dispositif de commande (18), sur la base de laquelle il est décidé quel signal de mesure peut être utilisé dans le cas de commutation respectif en tant que valeur de référence pour le déclenchement synchronisé en réseau du commutateur de puissance (9),
- des moyens qui peuvent générer un ordre de commutation déclenchant la commutation synchronisée en réseau du commutateur de puissance (9) étant prévus dans le dispositif de commande (18), **caractérisé en ce**
- **qu'**un autre transformateur de tension (17) est prévu sur un deuxième côté du commutateur de puissance (9),
- **que** des liaisons existent avec un dispositif de commande (18) pour les signaux de mesure du transformateur de courant (15) et des deux transformateurs de tension (16, 17).
